# EUROPÄISCHE PATENTANMELDUNG

(11) **EP 4 155 125 A2**
(43) Veröffentlichungstag der Anmeldung: **29.03.2023**
(21) Anmeldenummer: 22194544.7
(22) Anmeldetag: 08.09.2022
(51) Int. Cl.: B60P 1/44

(54) **HUBLADEBÜHNE**

(30) Priorität: 22.09.2021 DE 102021124585
(71) Anmelder: Palfinger Tail Lifts GmbH, 27777 Ganderkesee (DE)
(72) Erfinder: Walter, Volker, 28359 Bremen (DE)
(74) Vertreter: Möller, Friedrich

(57) **Zusammenfassung**

Hubladebühnen weisen heb-, senk- und/oder verschwenkbare Ladeplattformen (49) auf. Solche Ladeplattformen (49) sind mit parallelogrammartigen Hubwerken mit dem Heck eines Fahrzeugs verbunden. Das Heben und Senken sowie Verschwenken erfolgt bei bekannten Hubladebühnen durch getrennte Hydraulikzylinder oder elektrische Drehantriebe.

Die Erfindung sieht es vor, Antriebe zum Heben, Senken bzw. Verschwenken mit Spindeltrieben zu versehen oder alternativ die Antriebe zum Heben und Senken mit Seiltrieben (55) zu versehen, wobei der Antrieb zum Verschwenken der Ladeplattform (49) wenigstens einen Achsmotor (66) aufweist. Solche Antriebe sind einfach und platzsparend zu realisieren, vereinfachen den mechanischen Aufbau der Hubladebühne und lassen sich einfach steuern.

## Beschreibung

Die Erfindung betrifft eine Hubladebühne gemäß dem Oberbegriff des Anspruchs 1.

Hubladebühnen dienen dazu, das Be- und Entladen von Fahrzeugen mit insbesondere schweren Gütern zu erleichtern. Eine solche Hubladebühne verfügt über eine vorzugsweise an der Rückseite eines Aufbaus eines Fahrzeugs heb- und senkbar und hoch- bzw. herunterklappbar angebrachte Ladeplattform. Im hochgeklappten Zutand befindet sich die Ladeplattform in ihrer Ruhestellung, während sie im heruntergeklappten Zustand ihre Gebrauchsstellung einnimmt.

Es sind Hubladebühnen gebräuchlich, deren Ladeplattform rein hydraulisch angehoben, abgesenkt, hochgeklappt und heruntergeklappt werden. Solche Hubladebühnen weisen ein Hubwerk mit zu einer Art Parallelogramm verbundenen Lenkerarmen auf.

Es sind auch schon rein elektrisch arbeitende Hubladebühnen bekannt. Diese verfügen auch über Hubwerke, die den von Hydraulikzylindern betätigten Hubladebühnen entsprechen. Solchermaßen ausgebildete elektrisch betriebene Hubladebühnen haben sich nicht durchsetzen können.

Der Erfindung liegt nun die Aufgabe zugrunde, eine Hubladebühne zu schaffen, die über ein gegenüber den bisher bekannten Hubladebühnen verbessertes Antriebskonzept zum Heben, Senken, Hochklappen und Herunterklappen der Ladeplattform verfügt.

Eine Hubladebühne zur Lösung dieser Aufgabe weist die Merkmale des Anspruchs 1 auf. Bei dieser Hubladebühne sind die Antriebe zum Heben, Senken und Verschwenken, also Hochklappen und Herunterklappen, entweder als Spindeltriebe ausgebildet oder es sind die Antriebe zum Heben und Senken als Seiltriebe ausgebildet. Bei Seiltrieben zum Heben und Senken ist der Antrieb zum Verschwenken von wenigstens einem Achsmotor gebildet. Dadurch können die bei bekannten Hubladebühnen erforderlichen Hubwerke einfacher als bisher ausgebildet werden, wobei die rein elektrischen oder auch kombiniert elektrischen und hydraulischen oder pneumatischen Antriebe sich einfach gestalten lassen.

Bei einer ersten Variante der erfindungsgemäßen Hubladebühne ist es vorgesehen, an gegenüberliegenden Längsseiten der Ladeplattform jeweils einen Arm anzuordnen. Vorzugsweise stehen die Arme auf beiden Längsseiten der Ladeplattform gleichermaßen in Fahrtrichtung des Fahrzeugs schräg ansteigend gegenüber einer zum Fahrzeug weisenden, vorderen Querseite der Ladeplattform vor. Solche Arme lassen sich einfach realisieren.

Bei einer bevorzugten Ausgestaltung einer Arme an der Ladeplattform aufweisenden Hubladebühne ist jedem Arm ein Paar von zwei gleichen, parallelen und vorzugsweise selbsthemmenden Spindeltrieben zugeordnet. Ein jeweiliges Paar dieser Spindeltriebe ist auf jeder Seite der Hubladebühne vorgesehen, wobei die beiden Spindeltriebe jedes Spindeltriebpaars auf gegenüberliegenden Seiten der Hubladebühne bzw. des Fahrzeugs und/oder der Ladeplattform in Fahrtrichtung aufeinanderfolgend angeordnet sind, und zwar vorzugsweise hochstehend. Solche Spindeltriebe benötigen wenig Platz und lassen sich gegebenenfalls an gegenüberliegenden Ecken hinten am Fahrzeug, insbesondere im Aufbau desselben, unterbringen.

Bevorzugt verfügt jeder Spindeltrieb über eine Gewindespindel und eine hierauf angeordnete Laufmutter bzw. Spindelmutter. Die Laufmutter jedes Spindeltriebs ist vorzugsweise gelenkig bzw. drehbar mit dem jeweiligen Arm der Ladeplattform verbunden. Mit vorzugsweise vier solchermaßen ausgebildeten und insbesondere gleichen Spindeltrieben lässt sich die Ladeplattform mit den auf gegenüberliegenden Seiten derselben angeordneten Armen gezielt und bedarfsgerecht anheben, absenken und verschwenken, nämlich Hochklappen in die Ruhestellung und Herunterklappen in die Gebrauchsstellung. Indem bevorzugt wenigstens zwei der Laufmuttern gelenkig direkt oder indirekt an den Armen angelenkt sind, können sich diese Laufmuttern beim Verschwenken der Ladeplattform relativ zu den Armen zum Verschwenken verdrehen.

Es ist bevorzugt vorgesehen, durch synchrones Verdrehen aller Gewindespindeln in eine gleiche Richtung die Ladeplattform anzuheben und durch ein synchrones Verdrehen aller Gewindespindeln in eine entgegengesetzte Richtung die Ladeplattform abzusenken. Es können dadurch sämtliche Gewindespindeln gleichermaßen angetrieben werden durch einen einzigen Antrieb jeweils zweier Gewindespindeln oder einen einzelnen Antrieb jeder Gewindespindel. In allen Fällen kann durch einfaches Umschalten das Anheben oder Absenken der Ladeplattform mit ihren Armen herbeigeführt werden.

Ein Verschwenken, also Herunterklappen und Hochklappen der Ladeplattform kann dadurch erfolgen, dass die beiden Gewindespindeln jedes Spindelpaars auf den gegenüberliegenden Seiten der Ladeplattform in gegensinnige Drehrichtungen angetrieben werden. Das Umschalten von Hochschwenken und Herunterschwenken wird auf einfache Weise dadurch ermöglicht, dass die gegensinnigen Drehrichtungen der beiden Gewindespindeln jedes Spindelpaars gleichermaßen gewechselt werden.

Eine vorteilhafte Weiterbildung der Hubladebühne sieht es vor, dass der Antrieb der Spindeltriebe durch einen jeder einzelnen Gewindespindel zugeordneten Motor oder auch nur zwei Motoren erfolgt, wobei jeder Motor gleichzeitig zwei gegenüberliegende Gewindespindeln antreibt. Dadurch sind die Gewindespindeln jedes Gewindespindelpaars von unterschiedlichen Motoren antreibbar, wobei jedoch jeder Motor gleichzeitig zwei Gewindespindeln antreibt, nämlich jeweils eine Gewindespindel eines jeweiligen Gewindespindelpaars. Bei den Motoren handelt es sich vorzugsweise um Elektromotoren oder Hydraulikmotoren.

Bei den Elektromotoren kann es sich um Servomotoren handeln. Ebenso können die Hydraulikmotoren servogesteuerte Hydraulikmotoren sein. Solche Motoren sind einfach und präzise steuerbar und lassen sich insbesondere exakt synchronisieren zur Sicherstellung eines Gleichlaufs aller Gewindespindeln bei momentan gleichen oder auch unterschiedlichen Drehrichtungen.

Durch einfache Drehrichtungsumkehr der Motoren kann die Ladeplattform gezielt abgesenkt, angehoben oder verschwenkt werden. Während zum Anheben und Absenken stets alle Motoren so geschaltet sind, dass sie die gleiche Drehrichtung aufweisen, werden zum Herunter- und Hochklappen der Ladeplattform die Motoren so geschaltet, dass die beiden Gewindespindeln jedes Gewindespindelpaars an den entgegengesetzten Seiten der Hubladebühne von den Motoren in eine andere Richtung gedreht werden, wobei die gegenüberliegenden Gewindespindeln auf unterschiedlichen Seiten der Hubladebühne jeweils in die gleiche Richtung angetrieben werden. Auf diese Weise können die Antriebe einfach gesteuert und angesteuert werden.

Bei einer vorteilhaften Ausgestaltung der Erfindung sind alle Gewindespindeln aufrechtstehend angeordnet und mit ihren gegenüberliegenden Enden direkt oder indirekt drehbar am Chassis des Fahrzeugs gelagert. Dadurch führen die auf den Gewindespindeln auf- und abbewegbar gelagerten und mit den Armen verbundenen Laufmuttern je nach Drehrichtung der Gewindespindel zum Auf- oder Abbewegen bzw. zum Verschwenken der Ladeplattform.

Bevorzugt ist es vorgesehen, dass jede Gewindespindel an einem Ende drehend antreibbar ist. Bevorzugt ist zu diesem Zweck einem Ende jeder Gewindespindel ein eigener Motor zugeordnet. Die Motoren sind einfach in ihrer jeweiligen gewünschten Drehrichtung antreibbar, um die Ladeplattform entweder anzuheben, abzusenken, hoch- oder herunterzuschwenken. Es ist auch denkbar, nur zwei Motoren einzusetzen, wobei jeder Motor mit gegenüberliegenden Gewindespindeln auf unterschiedlichen Seiten des Fahrzeugs im die betreffenden Gewindespindeln drehend antreibbaren Sinne getrieblich gekoppelt ist.

Bei Hubladebühnen nach einer alternativen Lösung der Aufgabe und gemäß einer eigenständigen Erfindung ist es vorgesehen, jeder der gegenüberliegenden Längsseiten der Ladeplattform einen vorzugsweise gleichen Hubarm zuzuordnen. Bevorzugt ist ein in Fahrtrichtung gesehen vorderes Ende jedes Hubarms frei um eine horizontale, quer zur Fahrtrichtung des Fahrzeugs verlaufende Schwenkachse verschwenkbar direkt oder indirekt am Chassis des Fahrzeugs gelagert. Um diese Drehachse sind beide parallelen Hubarme zum Heben und Senken der Ladeplattform gleichermaßen verschwenkbar. Insbesondere ist es des Weiteren vorgesehen, mit den vorderen Enden gegenüberliegenden hinteren Enden die Hubarme mit der Ladeplattform zu verbinden, und zwar so, dass die Ladeplattform um eine zur Schwenkachse parallele Klappachse verschwenkbar ist, um die Ladeplattform hoch- oder herunterzuklappen.

Bevorzugt ist ein erstes Ende mindestens eines Seils jedes Seiltriebs an einer Anlenk- oder Verbindungsstelle zwischen den gegenüberliegenden Enden jedes Hubarms befestigt. Dadurch können die Seiltriebe die Hubarme zum Heben und zum Senken der Ladeplattform um die Drehachse, womit die Hubarme direkt oder indirekt am Chassis des Fahrzeugs gelagert sind, gleichermaßen zusammen, also synchron, verschwenken.

Vorzugsweise ist jeder Hubarm in einer eigenen vertikalen und in Fahrtrichtung verlaufenden Ebene angeordnet und vorzugsweise verschwenkbar. Die Hubarme und die Seiltriebe können in parallelen Ebenen angeordnet sein, wodurch ein gezieltes verkantungsfreies Anheben und Absenken der Ladeplattform gewährleistet ist. Vorzugsweise ist jeder Seiltrieb in der senkrechten Ebene, worin der jeweilige Hubarm von den Seiltrieben verschwenkbar ist, mindestens größtenteils flachliegend angeordnet. Das gewährleistet eine platzsparende Unterbringung und Anbringung der beiden parallelen Seiltriebe am Fahrzeug, insbesondere im hinteren Bereich und unter dem Aufbau des betreffenden Fahrzeugs.

Es kann vorgesehen sein, das mindestens eine Seil jedes Seiltriebs über eine Umlenkung, vorzugsweise eine Umlenkrolle, oberhalb des Hubarms, dem der jeweilige Seiltrieb zugeordnet ist, zu führen. Dadurch können die Seile der flachliegenden Seiltriebe über den Hubarm so umgelenkt werden, dass sie die Hubarme zum Anheben bzw. Absenken der Ladeplattform hoch- oder herunterschwenken können.

Bei einer vorteilhaften Ausgestaltung der Hubladebühne weist jeder Seiltrieb einen Linearantrieb auf. Beim Linearantrieb kann es sich um einen Spindeltrieb, einen Zahnstangentrieb, einen Shuttlezylinder, einen Pneumatikzylinder oder auch einen Hydraulikzylinder handeln. Vorzugsweise ist am Linearantrieb jedes Seilantriebs ein zweites Ende des mindestens einen Seils jedes Seilantriebs angekoppelt. Die Seile sind dadurch von den Linearantrieben in ihrer Verlaufsrichtung hin- und herbewegbar, und zwar stufenlos.

Es ist denkbar, die Hubladebühne so auszubilden, dass die Linearantriebe der beiden parallelen Seilantriebe synchron verfahrbar sind, so dass die diesen zugeordneten Seile gleichermaßen in den in Fahrzeuglängsrichtung verlaufenden vertikalen Ebenen, in denen auch die Hubarme liegen, hin- und herbewegbar sind, um gemeinsam die Ladeplattform anzuheben oder abzusenken. Auf diese Weise werden einfache und platzsparende sowie zuverlässige Antriebe für die Hubladebühne geschaffen.

Vorzugsweise ist die Hubladebühne so ausgestaltet, dass auf der Klappachse der Ladeplattform wenigstens ein Achsmotor angeordnet ist, wobei diese Anordnung so getroffen ist, dass die Drehachse und/oder Längsmittelachse jedes Achsmotors auf der Klappachse liegt. Durch den mindestens einen Achsmotor ist die Ladeplattform verschwenkbar, insbesondere in ihre Ruhestellung hochklappbar und ihre Gebrauchsstellung herunterklappbar (und umgekehrt).

Bevorzugt ist der mindestens eine Achsmotor einerseits mit dem auf der Klappachse angeordneten oder diesen bildenden zweiten, insbesondere hinteren, Ende der Hubarme und andererseits mit der Ladeplattform verbunden. Der mindestens eine Achsmotor ist beispielsweise mit seiner Motorwelle unverdrehbar mit den Hubarmen verbunden, während er im Übrigen mit der Ladeplattform verbunden ist. Dadurch führt ein drehender Antrieb der Motorwelle zu einem Verschwenken der Ladeplattform um ihre Klappachse.

Bevorzugte Ausführungsbeispiele der Erfindung werden nachfolgend anhand der Zeichnung näher erläutert. In dieser zeigen:
- Fig. 1: eine Seitenansicht eines hinteren Teils eines Fahrzeugs bei teilweise geschnittenen Kofferaufbau und sich in einer Ruhestellung befindlicher Ladeplattform der Hubladebühne,
- Fig. 2: eine Draufsicht der Hubladebühne der Fig. 1,
- Fig. 3: die Hubladebühne bei sich in der hochgefahrenen Gebrauchsstellung befindender Ladeplattform in einer Seitenansicht,
- Fig. 4: eine Draufsicht auf die Hubladebühne der Fig. 3,
- Fig. 5: eine perspektivische Darstellung der Hubladebühne bei sich in den Fig. 3 und 4 gezeigter Gebrauchsstellung befindlichen Ladeplattform,
- Fig. 6: eine Darstellung analog zur Fig. 5 bei sich in der Gebrauchsstellung befindender und abgesenkter Ladeplattform,
- Fig. 7: eine schematische Darstellung eines zwei Gewindespindeln aufweisenden Spindelpaars an einer Seite der Hubladebühne bei in der Ruhestellung sich befindender Ladeplattform,
- Fig. 8: eine Darstellung analog zur Fig. 7 bei in die Gebrauchsstellung heruntergeklappter Ladeplattform,
- Fig. 9: eine Darstellung analog zur Fig. 8 bei heruntergeklappter und abgesenkter Ladeplattform,
- Fig. 10: eine Darstellung analog zur Fig. 9 bei in die Gebrauchsstellung geschwenkter abgesenkter Ladeplattform nach ihrer Flurkantenanpassung,
- Fig. 11: eine perspektivische Ansicht einer Hubladebühne eines zweiten Ausführungsbeispiels der Erfindung und/oder einer eigenständigen Erfindung in ihrer Ruhestellung,
- Fig. 12: eine Seitenansicht der in Fig. 11 gezeigten Hubladebühne am Heck eines Fahrzeugs,
- Fig. 13: eine Draufsicht auf die Hubladebühne der Fig. 11 und 12,
- Fig. 14: eine perspektivische Ansicht einer in die Gebrauchsstellung heruntergeklappten, aber noch nicht abgesenkten, Ladeplattform,
- Fig. 15: eine Draufsicht auf die Hubladebühne gemäß der Fig. 14,
- Fig. 16: eine perspektivische Ansicht der Hubladebühne der Fig. 14 und 15, und
- Fig. 17: eine Seitenansicht der sich in der Gebrauchsstellung befindenden und vollständig abgesenkten Ladeplattform nach der Flurkantenanpassung.

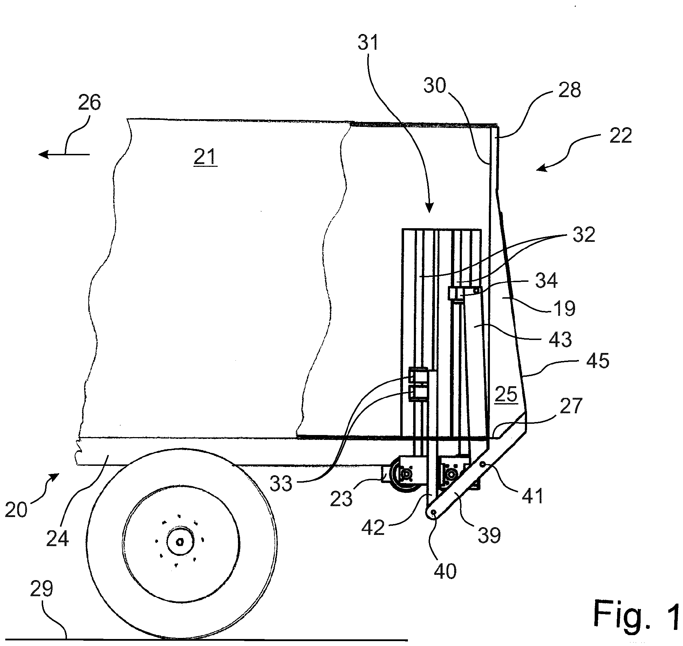

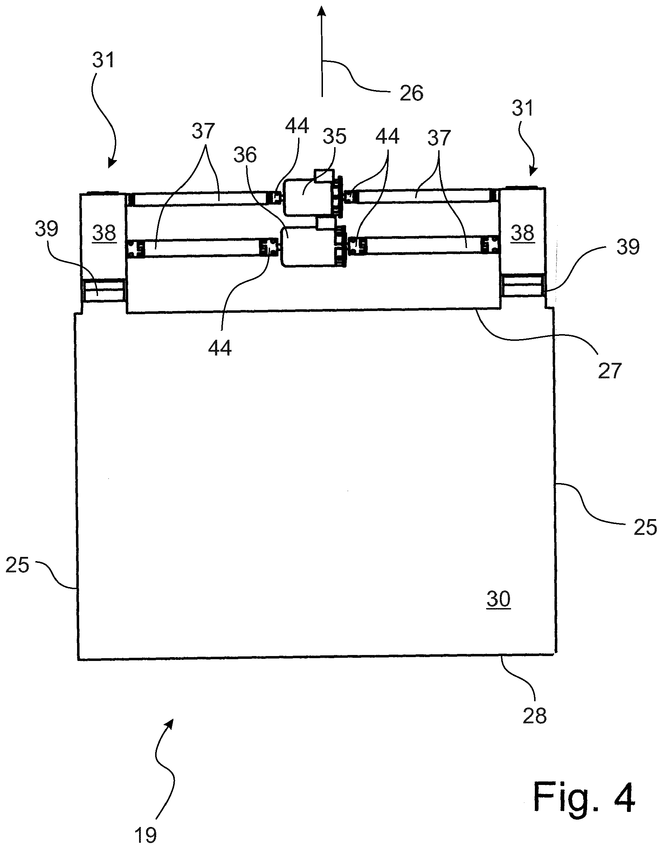

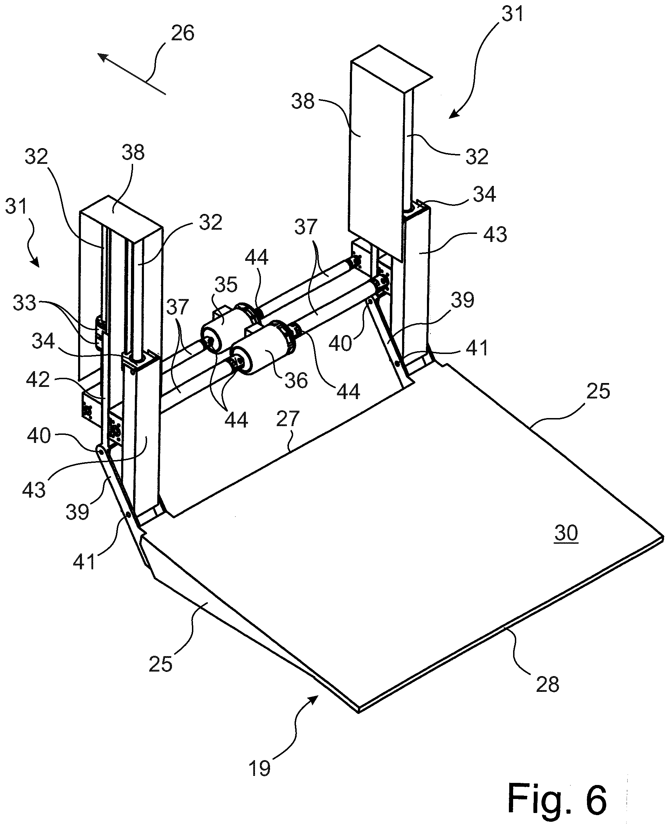

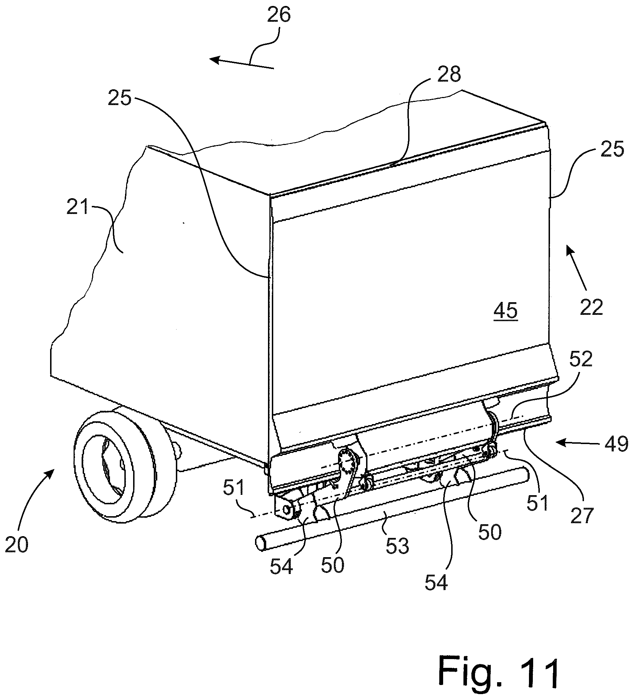

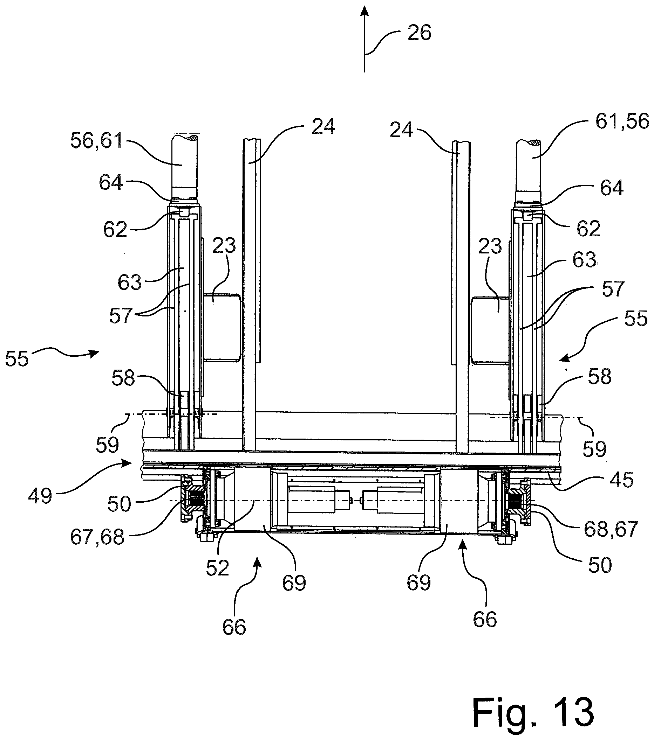

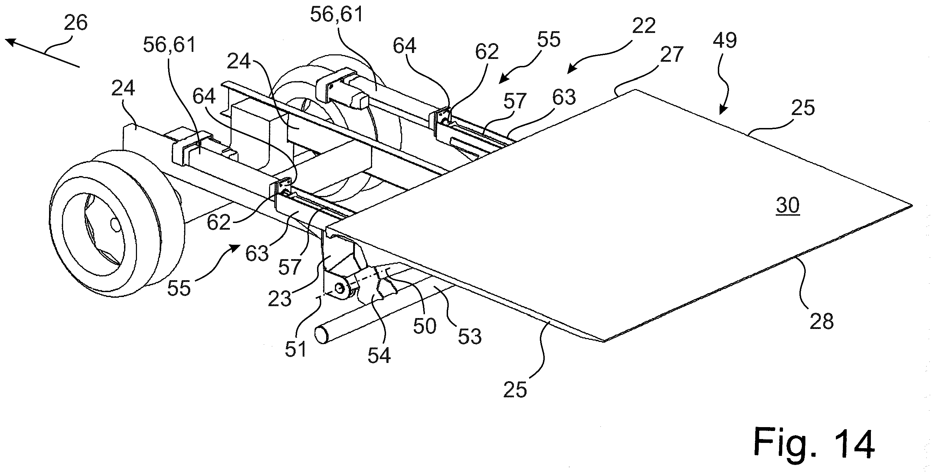

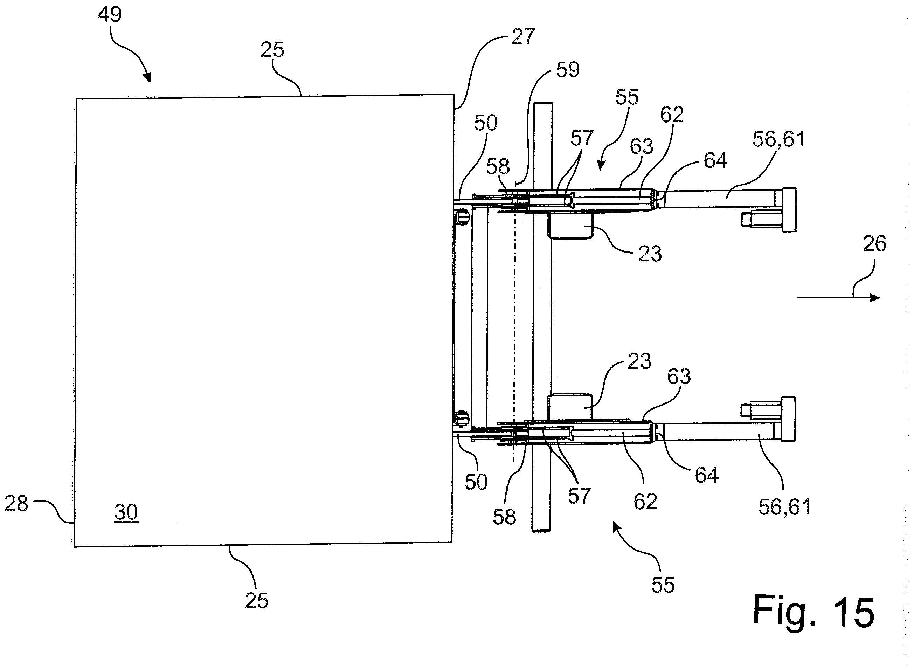

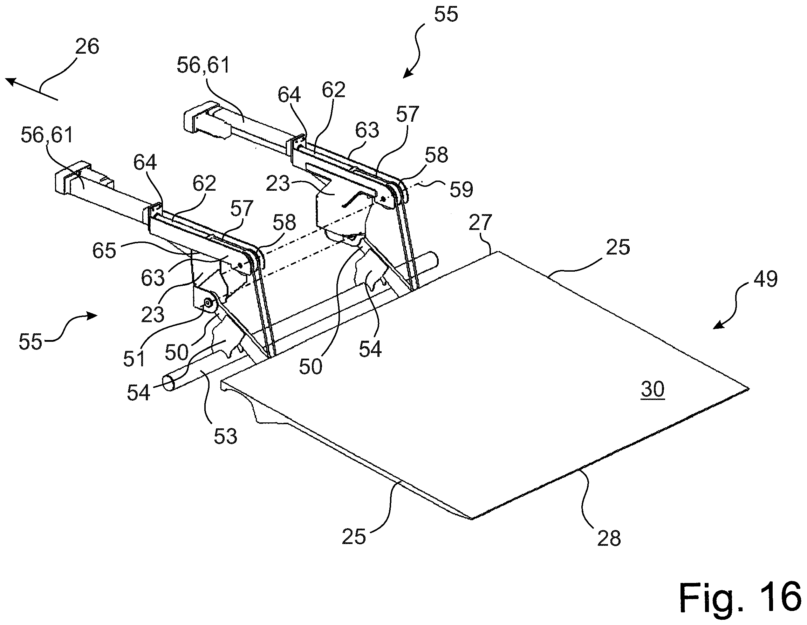

Die Figuren zeigen Hubladebühnen zum Be- und Entladen von Fahrzeugen mit einer heb- und senkbaren sowie hoch- und herunterklappbaren Ladeplattform. In den Fig. 1 bis 10 ist eine Hubladebühne mit einem ersten erfindungsgemäßen Antriebskonzept dargestellt. Die Fig. 11 bis 17 zeigen eine Hubladebühne mit einem zweiten erfindungsgemäßen Antriebskonzept.

Die in den Figuren gezeigten Hubladebühnen sind im hinteren Bereich eines Fahrzeugs angeordnet. In einigen Figuren ist der Heckbereich des Fahrzeugs, bei dem es sich beispielsweise um einen Lastkraftwagen 20 handelt, dargestellt. In der Fig. 1 ist ein hinterer Teil eines Aufbaus 21, und zwar eines sogenannten Kofferaufbaus, des Lastkraftwagens 20 dargestellt. In der beispielsweise in der Fig. 1 gezeigten hochgefahrenen und hochgeklappten Ruhestellung der Ladeplattform kann diese eine offene Rückseite 22 des Aufbaus 21 verschließen. Es ist aber auch denkbar, dass der Aufbau 21 auf der Rückseite 22 Türen oder eine Jalousie aufweist. Dann ist die Ladeplattform in ihrer Ruhestellung hinter die geschlossenen Türen oder die geschlossene Jalousie hochgeklappt.

Die Hubladebühne ist entweder direkt oder indirekt über sogenannte Tragrohre oder Konsolen 23 mit einem Chassis, insbesondere Längsträger 24 desselben, verbunden.

Die Ladeplattform 19 der Fig. 1 bis 10 verfügt über gegenüberliegende Längsseiten 25, die parallel zueinander und in Fahrtrichtung 26 des Lastkraftwagens 20 verlaufen sowie quer zur Fahrtrichtung 26 verlaufende Querseiten 27 und 28. Eine vordere Querseite 27 schließt sich bei in der Gebrauchsstellung befindlicher Ladeplattform 19 an die Rückseite 22 des Aufbaus 21 des Lastkraftwagens 20 an, während eine hintere Querseite 28 eine freie Seite der Ladeplattform 19 bildet, worüber die Ladeplattform be- und entladen werden kann. Diese hintere Querseite 28 ist nach Art einer Spitze ausgebildet, so dass die Ladeplattform19 in ihrer auf den Boden 29 abgesenkten Betriebsstellung nahezu stufenlos auf das Niveau des Bodens 29 übergeht.

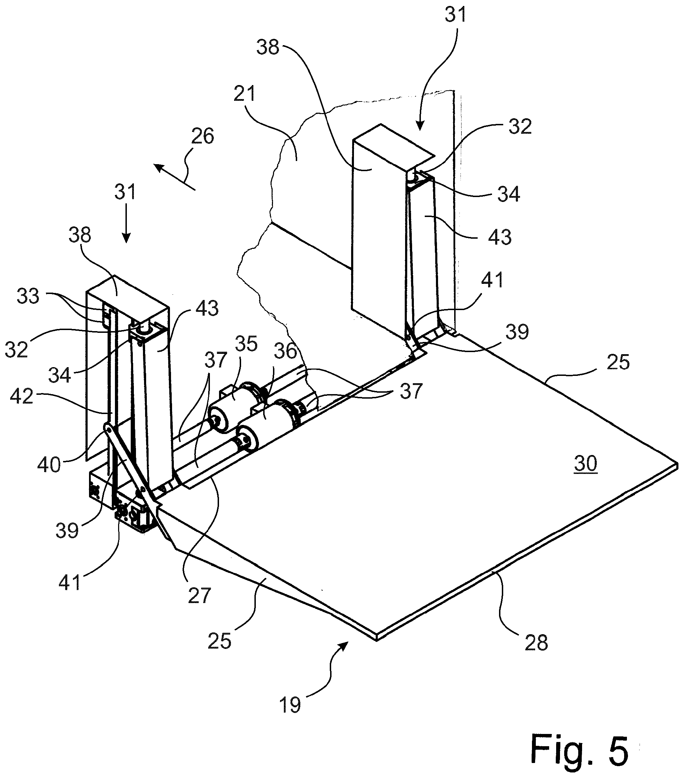

Die Grundfläche der Ladeplattform 19 ist rechteckig ausgebildet. Dabei erstreckt sich die Breite der Ladeplattform 19 bei der gezeigten Hubladebühne über die gesamte Breite der Rückseite 22 des Aufbaus 21. Es sind aber auch schmalere Ladeplattformen denkbar, die nicht die gesamte Breite der Rückseite 22 des Aufbaus 21 einnehmen. Eine beispielsweise in der Fig. 5 gezeigte Oberseite der Ladeplattform 19 bildet eine Nutzseite 30 derselben, die befahrbar ist und auf der Güter abgestellt werden können.

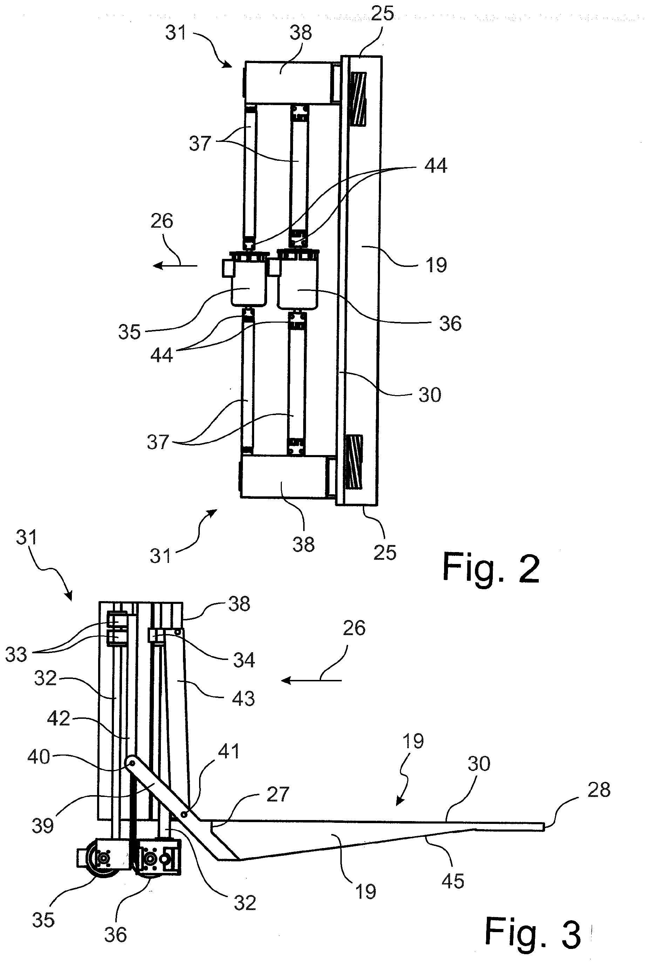

Die in den Fig. 1 bis 10 gezeigte Hubladebühne weist motorisch betriebene Spindeltriebe 31 auf. Diese dienen sowohl zum Heben und Senken der Ladeplattform 19 als auch zum Hochklappen und Herunterklappen der Ladeplattform 19. Die zwei gleich ausgebildeten Spindeltriebe 31 sind in umgekehrter, nämlich um vertikale Längsmittelebenen des Aufbaus 21 gespiegelter Orientierung auf gegenüberliegenden Seiten der Hubladebühne angeordnet. Die dargestellten Spindeltriebe 31 sind an Innenseiten im Bereich der Rückseite 22 des Aufbaus 21 aufrechtstehend angeordnet. Dadurch befinden sich die Spindeltriebe 31 an gegenüberliegenden hinteren Ecken des Lastkraftwagens 20. Der Abstand der Außenseiten der Spindeltriebe 31 ist vorzugsweise so gewählt, dass er der Breite der Ladeplattform 19 entspricht oder (gemäß der Darstellung in der Fig. 2) etwas geringer ist, beispielsweise um die doppelte Wandstärke des Aufbaus 21.

Jeder der zwei gleich ausgebildeten Spindeltriebe 31 an gegenüberliegenden Seiten der Hubladebühne verfügt über zwei längliche Gewindespindeln 32 und auf den Gewindespindeln angeordnete Laufmuttern 33, 34. Die beiden parallelen Gewindespindeln 32 auf jeder Seite des Aufbaus 21 bilden ein Gewindespindelpaar. Die beiden Gewindespindeln 32 jedes Gewindespindelpaars liegen in Fahrtrichtung 26 gesehen hintereinander, und zwar parallel zueinander senkrecht verlaufend. Dadurch befinden sich die Gewindespindelpaare der beiden Spindeltriebe 31 in zwei beabstandeten parallelen vertikalen Ebenen, die in Fahrtrichtung 26 verlaufen. Die Gewindespindeln 32 sind drehend antreibbar. Im vorliegenden Falle werden jeweils zwei Gewindespindeln 32 von einem gemeinsamen Motor 35, 36 angetrieben. Dazu ist der in Fahrtrichtung 26 vorderen Gewindespindel 32 jedes Gewindespindelpaars jedes Spindeltriebs auf gegenüberliegenden Seiten der Hubladebühne ein vorderer Motor 35 und den beiden hinteren gegenüberliegenden Gewindespindeln 32 ein hinterer Motor 36 zugeordnet. Die beiden Motoren 35 und 36 sind bevorzugt gleich bzw. gleichartig ausgebildet, und zwar entweder als Elektromotor oder als Hydraulik- oder auch Druckluftmotor.

Gemäß der Fig. 2 sind die beiden Motoren 35 und 36 auf parallel zueinander verlaufenden horizontalen Achsen quergerichtet zur Fahrtrichtung 26 angeordnet und vorzugsweise direkt oder indirekt mit dem Chassis des Lastkraftwagens 20 verbunden. Die beiden quergerichteten Motoren 35 und 36 weisen an gegenüberliegenden Stirnseiten Abtriebswellenstummel 44 auf, die mit Kraftübertragungswellen 37, die gegebenenfalls als Kardanwellen ausgebildet sein können, verbunden sind. Die von den Motoren 35 und 36 weggerichteten Enden der vorzugsweise gleichen Kraftübertragungswellen 37 sind über ein Winkelgetriebe oder Gelenke mit der jeweiligen Gewindespindel 32, und zwar ihrem unteren Ende, verbunden. Dadurch ist von jedem Motor 35, 36 eine Gewindespindel 32 jedes Spindeltriebs 31 auf gegenüberliegenden Seiten der Hubladebühne antreibbar. Außerdem ist sowohl das untere als auch das obere Ende jeder Gewindespindel 32 frei drehbar in ortsfesten Lagern gelagert, wodurch die Gewindespindeln 32 nur drehbar, aber im Übrigen unbeweglich in oder an Gehäusen bzw. Abdeckungen 38 der Spindeltriebe 31 gehalten sind.

Falls jeder Gewindespindel 32 ein eigener Motor zugeordnet ist, also nicht nur zwei Motoren 35, 36, sondern insgesamt vier Motoren vorgesehen sind, können diese direkt das untere Ende jeder Gewindespindel 32 tragen und somit die Lager der Motoren gleichzeitig als untere Lager der Gewindespindeln 32 dienen. Alle vier Motoren werden dann an der Unterseite der Abdeckung 38 der Spindeltriebe 31 auf gegenüberliegenden Seiten der Hubladebühne bzw. Ladeplattform 19 fest angeordnet.

Mit der Ladeplattform 19 sind zwei vorzugsweise gleiche, parallele Arme 39 fest und unverdrehbar verbunden. Die Arme 39 ragen gegenüber der Nutzseite 30 der Ladeplattform 19 vor, und zwar so, dass sie bei in die Ruhestellung hochgeklappter Ladeplattform 19 in Fahrtrichtung 26 vorstehen und nach unten gerichtet sind (Fig. 1). Die Arme 39 können mit gegenüberliegenden Längsseiten 25 der Ladeplattform 19 durch Schrauben und/oder Schweißen verbunden sein, und zwar so, dass sie sich in den zur vorderen Querseite 27 weisenden Endbereichen der Längsseiten 25 der Ladeplattform 19 befinden. Alternativ können die Arme 39 auch an den äußeren Enden der vorderen Querseite 27 der Ladeplattform 19 befestigt sein.

Die starren Arme 39 an gegenüberliegenden Seiten der Ladeplattform 19 verfügen jeweils über zwei beabstandete Anlenkstellen 40 und 41 für an den Laufmuttern 33, 34 der Gewindespindel 32 befestigte Lenkerarme 42 und 43. Eine erste Anlenkstelle 40 jedes Arms 39 befindet sich in der Nähe seines von der Ladeplattform 19 weggerichteten freien Endes. Hiermit ist gelenkig ein unteres Ende des Lenkerarms 42 der Laufmutter 33 der in Fahrtrichtung 26 vorderen Gewindespindel 32 verbunden. Die Anlenkstelle 41 jedes Arms 39 ist von der endseitigen Anlenkstelle 40 beabstandet, und zwar vorzugsweise so weit, wie die beiden Gewindespindeln 32 auf jeder Seite des Aufbaus 21 voneinander beabstandet sind. Hieran ist der Lenkerarm 43 schwenkbar befestigt. Ein anderes, oberes Ende dieses Lenkerarms 43 ist mit einer Laufmutter 34 der hinteren Gewindespindel 32 jedes Gewindespindelpaars auf gegenüberliegenden Seiten der Hubladebühne befestigt, und zwar vorzugsweise auch schwenkbar. Somit sind die gegenüberliegenden Enden des jeweils hinteren Lenkerarms 43 gelenkig sowohl mit der Laufmutter 34 auf der hinteren Gewindespindel 32 als auch mit der inneren bzw. mittigen Anlenkstelle 41 am jeweiligen Arm 39 verbunden. Hingegen ist das der Anlenkstelle 40 am Arm 39 gegenüberliegende obere Ende des jeweiligen Lenkerarms 42 starr mit der Laufmutter 33 auf der jeweiligen vorn liegenden Gewindespindel 32 eines jeden Gewindespindelpaars verbunden. Im gezeigten Ausführungsbeispiel ist aufgrund dieser starren Verbindung die den jeweiligen Lenkerarm 42 zugeordnete Laufmutter 33 als Doppelmutter ausgebildet und verfügt dadurch über etwa die doppelte Länge als die jeweilige Laufmutter 33 auf den hinteren Gewindespindeln 32. Dadurch sind die vorderen Lenkerarme 42 im Wesentlichen unbeweglich, insbesondere unverkippbar, an der jeweiligen vorderen Gewindespindel 32 gelagert und gehalten.

Bei den gleichen Spindeltrieben 31 auf jeder Seite der Hubladebühne liegen die beiden Gewindespindeln 32 des jeweiligen Gewindespindelpaars, die diesen zugeordneten Lenkerarme 42 und 43 und der dazugehörende Arm 39 an der Ladeplattform 19 etwa in paralleler Fahrtrichtung 26 verlaufenden vertikalen Ebenen. Diese beiden Ebenen der gegenüberliegenden Spindeltriebe 31 verlaufen parallel zueinander in der Nähe der Innenseite von Seitenwänden des Aufbaus 21.

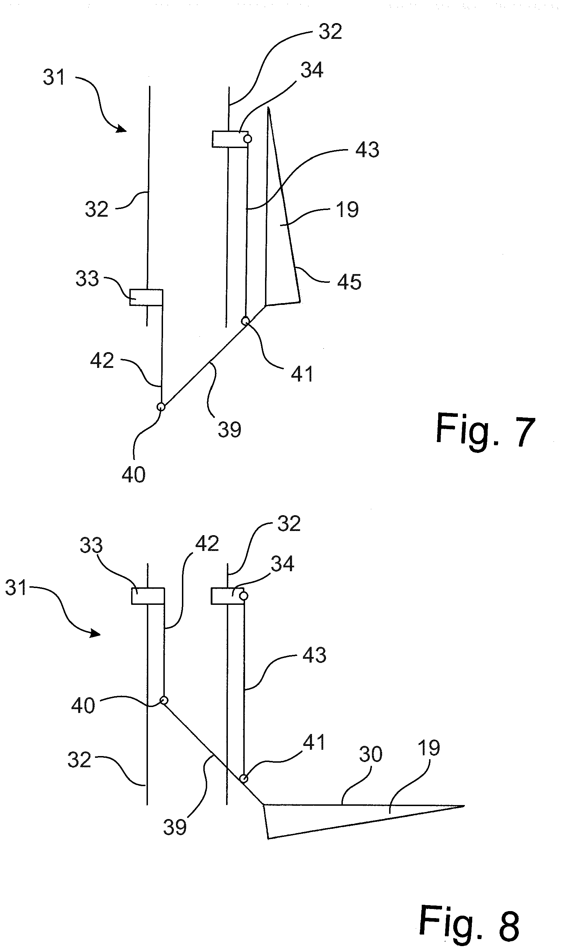

Die Fig. 7 bis 10 verdeutlichen schematisch die gleichen, synchronen Bewegungsabläufe der zwei gegenüberliegenden Spindeltriebe 31 zum Heben, Senken und Verschwenken der Ladeplattform 19 und den hiermit fest verbundenen schräggerichteten Armen 39.

Die Fig. 7 zeigt die Ruhestellung der Hubladebühne bei hochgeklappter Ladeplattform 19. Hier verlaufen Arme 39 ausgehend von der Ladeplattform 19 schräg nach unten gerichtet in Fahrtrichtung 26. Die vorderen Laufmuttern 33 sind dabei auf den vorn liegenden Gewindespindeln 32 heruntergefahren, während die hinteren Laufmuttern 34 auf den hinten liegenden Gewindespindeln 32 hochgeschraubt sind.

Beim Herunterklappen der Ladeplattform 19 in die Gebrauchsstellung wird die Ladeplattform 19 mit den daran befestigten Armen 39 verschwenkt, wobei nach dem Herunterklappen der Ladeplattform 19 die Arme 39 in Fahrtrichtung 26 schräg nach oben gerichtet sind.

Die Fig. 8 zeigt die in die Gebrauchsstellung heruntergeschwenkte Ladeplattform 19. Dabei sind nur die vorderen Laufmuttern 33 aus den vorn liegenden Gewindespindeln 32 hochgeschraubt, und zwar etwa auf die Höhe der hinteren Laufmuttern 34. Dadurch wird die Ladeplattform 19 in die Gebrauchsstellung heruntergeschwenkt allein durch den gleichzeitigen synchronen Antrieb der vorderen Gewindespindel 32 durch den diesem zugeordneten vorderen Motor 35. Die hinteren Gewindespindeln 32 brauchen somit zum Herunterklappen der Ladeplattform 19 in ihre Gebrauchsstellung nicht bewegt zu werden.

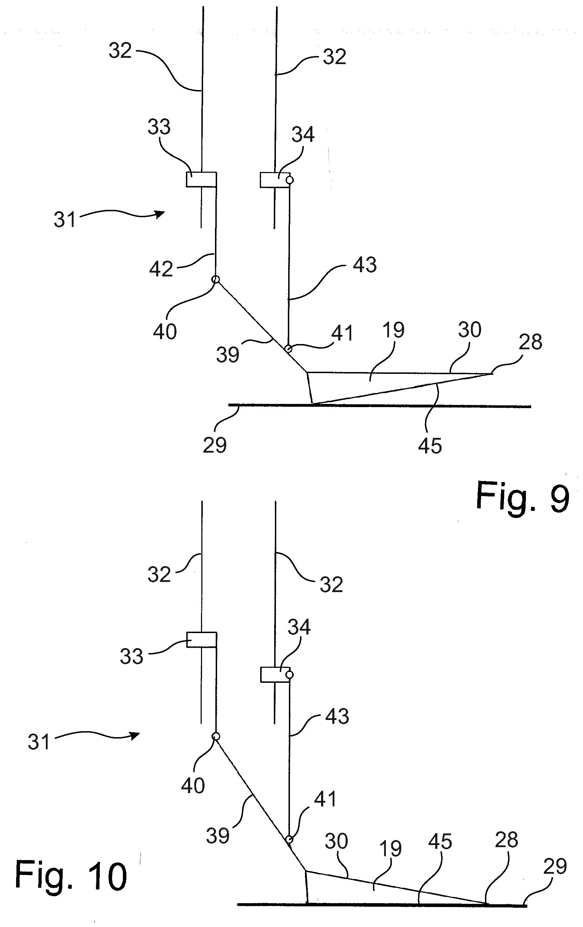

Zum Herunterfahren der Ladeplattform 19 werden gemäß der Fig. 9 alle Laufmuttern 33 und 34 auf allen Gewindespindeln 32 gleichweit heruntergeschraubt durch gleichsinnigen Antrieb aller vier Gewindespindeln 32 durch die Motoren 35 und 36. Dabei liegt die Ladeplattform 19 mit ihrer Unterseite 45 auf dem Boden 29 an.

Die Fig. 10 zeigt die Ladeplattform 19 nach erfolgter Bodenangleichung, bei der die Ladeplattform 19 geringfügig bezogen auf die Darstellung in der Fig. 10 im Uhrzeigersinn verschwenkt wurde, bis die hintere Querseite 28, also die Spitze, der Ladeplattform 19 auf dem Boden 29 anliegt. Dazu werden nur die vorderen Laufmuttern 33 auf den vorderen Gewindespindeln 32 durch den Motor 35 entsprechend hochgedreht.

Das Zurückschwenken der Ladeplattform 19, das Hochfahren derselben und das Hochklappen der Ladeplattform 19 in die Ruhestellung erfolgen durch Antrieb der Motoren 35 und/oder 36 in entgegengesetzten Drehrichtungen. Dementsprechend erfolgt das Umschalten von Heben und Senken der Ladeplattform 19 durch Änderung bzw. Umschaltung der gleichen Drehrichtung beider Motoren 35, 36. Zum Verschwenken bzw. Hochklappen der Ladeplattform 19 wird nur die Drehrichtung des hinteren Motors 36 umgekehrt bzw. umgeschaltet.

Die Fig. 11 bis 17 zeigen eine Hubladebühne gemäß einem anderen Ausführungsbeispiel und/oder einer anderen Erfindung. Diese Hubladebühne verfügt über eine Ladeplattform 49, die wie die Ladeplattform 19 der Fig. 1 bis 10 an der Rückseite 22 eines Aufbaus 21 eines Lastkraftwagens 20 angeordnet ist. Mit dem Lastkraftwagen 20 ist die Hubladebühne direkt bzw. indirekt verbunden. Dazu ist die Hubladebühne an Längsträgern 24 des Lastkraftwagens 20 oder einem daran befestigten Tragrohr mit Konsolen 23 befestigt.

Bei der hier gezeigten Hubladebühne sind zwei beabstandete Hubarme 50 vorgesehen. Die gleich ausgebildeten Hubarme 50 verlaufen parallel zueinander, indem sie in parallelen senkrechten und in Fahrtrichtung 26 verlaufenden Ebenen angeordnet sind. Bevorzugt sind die beiden Hubarme 50 gegenüberliegenden Seiten des Chassis des Lastkraftwagens 20 und der Hubladebühne zugeordnet und/oder gegenüberliegenden Außenseiten der beiden parallelen in Fahrtrichtung 26 verlaufenden Längsträgern 24 angeordnet. Jeder Hubarm 50 ist mit einem in Fahrtrichtung 26 vornliegenden Ende mit der am jeweiligen Längsträger 24 befestigten Konsole 23 um eine horizontale, quer zur Fahrtrichtung 26 verlaufende Schwenkachse 51 frei beweglich verbunden. Die Schwenkachsen 51 beider Hubarme 50 liegen auf einer gemeinsamen (gedachten) Verbindungslinie, die horizontal quer zur Fahrtrichtung 26 des Lastkraftwagens 20 verläuft.

Ein gegenüberliegendes, in Fahrtrichtung 26 hinteres Ende jedes Hubarms 50 ist mit einem von der vorderen Querseite 27 der Ladeplattform 49 ausgehenden Querseitenbereich der Ladeplattform 49 verbunden. Diese Verbindung erfolgt so, dass im hinteren Endbereiche beider Hubarme 50 die Ladeplattform 49 um eine horizontale, quer zur Fahrtrichtung 26 verlaufende Klappachse 52 verschwenkbar ist von der Ruhestellung in die Gebrauchsstellung sowie zur Bodenangleichung und umgekehrt.

Bei der in den Figuren gezeigten Hubladebühne ist den Hubarmen 50 ein Unterfahrschutz zugeordnet. Dazu ist ein quer zur Fahrtrichtung 26 horizontal verlaufendes Unterfahrschutzrohr 53 über jeweils einen Halter 54 mit jedem Hubarm 50 verbunden.

Jedem der gleichen parallel zueinander verlaufenden Hubarme 50 ist ein eigener Seiltrieb 55 zugeordnet. Beide Seiltriebe 55 sind gleich ausgebildet. Jeder Seiltrieb 55 verfügt über einen eigenen Linearantrieb 56 und zwei gleiche, parallele Seile 57. Aus Redundanzgründen verfügt jeder Seilantrieb 55 über zwei parallele Seile 57. Es ist aber auch denkbar, dass jeder Seilantrieb 55 nur über ein einziges Seil oder gegebenenfalls auch mehr als zwei Seile verfügt.

Jedes der insgesamt im gezeigten Ausführungsbeispiel vier Seile 57 ist um eine eigene Seilrolle 58 geführt. Es ist auch denkbar, die beiden parallelen Seilrollen 58 jedes Seiltriebs 55 zu einer Doppelrolle zu verbinden. Die Seilrollen 58 liegen auf einer gemeinsamen gedachten Achse, die parallel zu den Schwenkachsen 51 der Hubarme 50 sowie zur Klappachse 52 verläuft. Auf dieser gemeinsamen Achse liegen horizontale, quer zur Fahrtrichtung 26 verlaufende Drehachsen 59, um die die Seilrollen 58 frei drehbar sind.

Ein in Fahrtrichtung 26 gesehener hinterer Teil jedes Seils 57 verläuft ausgehend von der jeweiligen Seilrolle 58 zum Hubarm 50, dem der jeweilige Seiltrieb 55 zugeordnet ist. Ein freies Ende dieses Teils jedes Seils 57 ist mit dem betreffenden Hubarm 50 verbunden an einer Anlenkstelle 60 jedes Hubarms 50. Die jeweilige Anlenkstelle 60 befindet sich in einem mittleren Bereich zwischen gegenüberliegenden Enden des betreffenden Hubarms 50. Im gezeigten Ausführungsbeispiel befindet sich die Anlenkstelle 60 dichter am hinteren Ende als am vorderen Ende. Dadurch befinden sich die Anlenkstellen 60 der Seile 57 an den Hubarmen 50 zwischen der Schwenkachse 51 und der Klappachse 52 an gegenüberliegenden Enden bzw. Endbereichen der Hubarme 50.

Die gleichen Linearantriebe 56 jedes der beiden Seiltriebe 55 sind bei der hier gezeigten Hubladebühne als Hydraulikzylinder 61 ausgebildet. Gegebenenfalls können die Linearantriebe 56 auch von Pneumatikzylindern gebildet sein. Alternativ ist es auch denkbar, die Linearantriebe 56 von Spindeltrieben, Zahnstangentrieben oder Shuttlezylinder zu bilden.

Ein freies Ende einer ein- und ausfahrbaren Kolbenstange 62 des Hydraulikzylinders 61 jedes Seiltriebs 55 ist mit den beiden parallelen Seilen 57 des jeweiligen Seiltriebs 55 verbunden. Die Hydraulikzylinder 61 beider Linearantriebe 56 sind zusammen gesteuert synchron, also gleichermaßen, ein- und ausfahrbar. Dadurch werden auch die beiden parallelen Seile 57 jedes Seiltriebs 55 bei gleichzeitigem und gleichartigen (synchronen) Ein- und Ausfahren der Kolbenstangen 62 der Hydraulikzylinder 61 gleichermaßen auf ihren Längsmittelachsen hin- und herbewegt und/oder verschoben. Dadurch sind beide Hubarme 50 gleichermaßen synchron um ihre Schwenkachsen 51 verschwenkbar, wodurch die hinteren Enden bzw. Endbereiche der Hubarme 50 gleichermaßen auf- und abbewegbar sind zum Heben und Senken der Ladeplattform 49. Dabei erfolgt das synchrone Auf- und Abbewegen der Hubarme 50 derart, dass die den jeweiligen hinteren Endbereichen der Hubarme 50 zugeordneten Klappachsen 52 beim Auf- und Abbewegen der Ladeplattform 49 lediglich parallel verschoben werden, aber nicht ihre Neigung ändern.

Mindestens die Mitten der beiden parallelen Seile 57 jedes Seiltriebs 55 liegen in der gleichen vertikalen und in Fahrtrichtung 26 verlaufenden Ebene, in der sich auch der den Seilen 57 zugeordnete Hubarm 50 befindet. Bevorzugt befindet sich auch die Längsmittelachse des Hydraulikzylinders 61 jedes Linearantriebs 56 in der genannten Ebene des betreffenden Seiltriebs 55. Dabei verlaufen die Mitten der Hydraulikzylinder 61 horizontal in Fahrtrichtung 26 des Lastkraftwagens 20. Die Hydraulikzylinder 61 beider Linearantriebe 56 sind fest mit dem Chassis des Lastkraftwagens 20 verbunden. Diese Verbindung erfolgt durch längliche, horizontal in Fahrtrichtung 26 verlaufende Träger 63. Die Träger 63 beider Linearantriebe 56 sind gleich ausgebildet. Die Zylinder der Hydraulikzylinder 61 sind mit ihren kolbenstangenseitigen Enden mit einem in Fahrtrichtung vornliegenden Ende des jeweiligen Trägers 63 fest verbunden, vorzugsweise verschraubt. Gegenüberliegende, hintere Endbereiche der Träger 63 dienen als Lagerung für die Seilrollen 58 und tragen dadurch zur Bildung der Drehachse 59 der Seilrollen 58 bei. Die Träger 63 sind mit oberen Enden 65 der Konsolen 23 an gegenüberliegenden Seiten der Längsträger 24 des Lastkraftwagens 20 fest verbunden, vorzugsweise verschweißt und/oder verschraubt. Diese Verbindung erfolgt derart, dass die länglichen Träger 63 horizontalgerichtet parallel zueinander in Fahrtrichtung 26 des Lastkraftwagens 20 verlaufen. Infolge der etwa mittigen Verbindung der Träger 63 mit den Konsolen 23 stehen gegenüberliegende Enden der Träger 63 in und gegen die Fahrtrichtung 26 gegenüber der Konsolen 23 vor. Jeder Träger 63 bildet so einen in Fahrtrichtung 26 gesehen vorderen Kragarm, an dem der jeweilige Hydraulikzylinder 61 befestigt ist und einen hinteren Kragarm zur frei drehbaren Lagerung der Seilrollen 58.

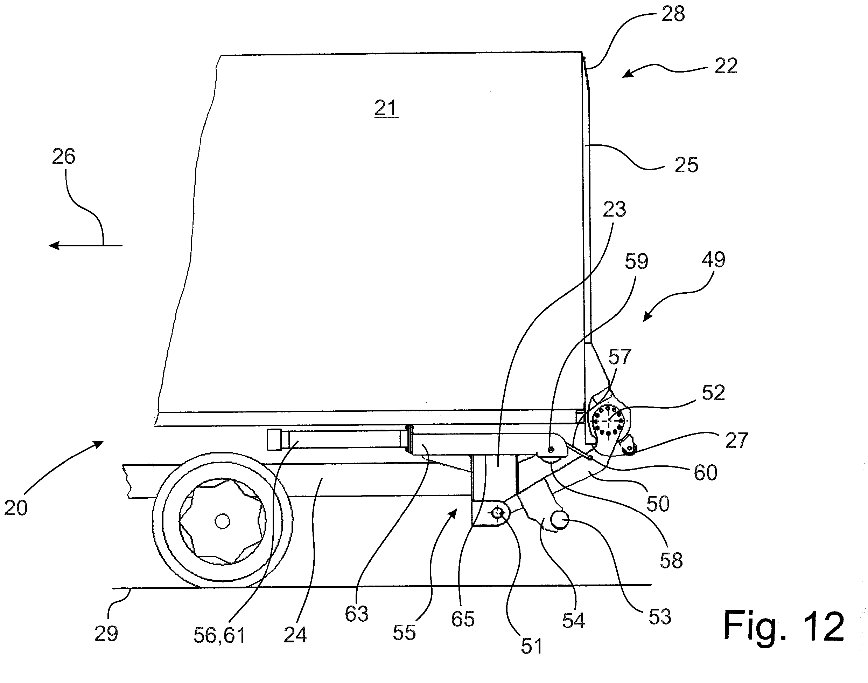

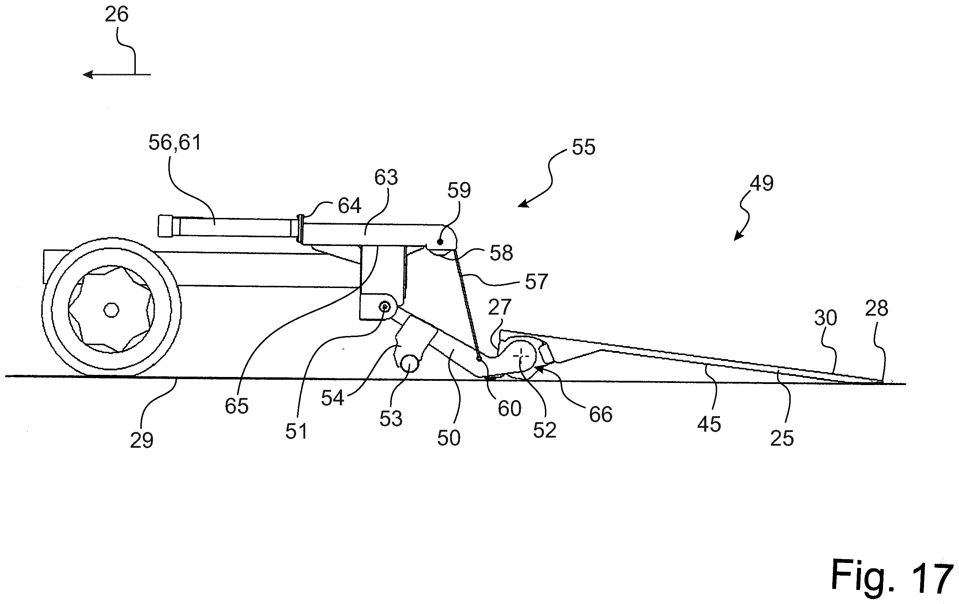

Dadurch befinden sich die Seilrollen 58 über den Mitten der Hubarme 50, wodurch die Seile 57 zwischen den Seilrollen 58 und den Anlenkstellen 60 der Enden der Seile 57 an den Hubarmen 50 unter einem jeweils gleichen, günstigen Zugwinkel an den Hubarmen 50 angreifen (Fig. 12 und 17).

Die Ladeplattform 49 ist um ihre Klappachse 52 zwischen den ihr zugeordneten hinteren Enden bzw. Endereichen der Hubarme 50 verschwenkbar. Dieses Verschwenken erfolgt bei der hier gezeigten Hubladebühne durch zwei Achsmotoren 66, deren Motorwellen 67 gemeinsam auf der Klappachse 52 liegen. Bei den Achsmotoren 66 kann es sich um elektrisch betriebene oder hydraulisch betriebene Motoren handeln. Vor allem bei elektrisch betriebenen Achsmotoren 66 kann ein Getriebe, vorzugsweise ein Planetengetriebe, angeordnet sein, um die höhere Motordrehzahl auf die erforderliche niedrige Klappgeschwindigkeit der Ladeplattform 49 zu reduzieren.

Ein Gehäuse 69 jedes Achsmotors 66 ist fest, insbesondere drehfest, mit einem von der vorderen Querseite 27 ausgehenden Randbereich der Unterseite 45 der Ladeplattform 49 verbunden. Demgegenüber ist eine Abtriebswelle 68 der Motorwelle 67 jedes Achsmotors 66 mit dem jeweiligen Hubarm 50 drehfest verbunden. Dadurch ist bei angetriebenen Achsmotoren 66 das Gehäuse 69 jedes Achsmotors 66 um die unverdrehbar mit dem jeweiligen Hubarm 50 verbundene Motorwelle 67 verdrehbar zum Hochklappen bzw. Herunterklappen der Ladeplattform 49. Es ist denkbar, dass statt zweier paralleler synchron betriebener Achsmotoren 66 zum Verschwenken der Ladeplattform 49 um die Klappachse 52 nur ein einziger Achsmotor hinter dem unteren bzw. vorderen Randbereich der Ladeplattform 49 angeordnet ist. Ein solcher Achsmotor 66 weist zwei gegenüberliegende Abtriebswellen 68 auf, die an ihren Enden jeweils mit den Hubarmen 50 zumindest drehfest verbunden sind.

Das Herunterklappen der Ladeplattform 49 erfolgt durch gleichermaßen gemeinsamen Antrieb der Achsmotoren 66, die so jede Ladeplattform 49 um die Klappachse 52 im Uhrzeigersinn (bezogen auf die Darstellung in den Fig. 11 bis 17) verschwenken. Durch den entgegengesetzten, synchronen Antrieb beider Achsmotoren 66 erfolgt das Hochschwenken der Ladeplattform 49 in die Ruhestellung gegen den Uhrzeigersinn.

Durch zusammen mit dem gleichen Weg (synchron) ausgefahrene Kolbenstangen 62 der Hydraulikzylinder 61 wird die Ladeplattform 49 abgesenkt. Dabei werden von den Kolbenstangen 62 die jeweils daran befestigten Seile 57 nach rechts bzw. schräg unten (bezogen auf die Fig. 11 bis 17) verlagert. Hierbei werden beide Hubarme 50 um den gleichen Winkel synchron um ihre Schwenkachsen 51, also bezogen auf die Fig. 11 bis 17 im Uhrzeigersinn, verschwenkt und dadurch die Ladeplattform 49 abgesenkt. Durch umgekehrtes Einfahren der Kolbenstangen 62 der Hydraulikzylinder 61 werden die Seile 57 beider Seiltriebe 55 in Fahrtrichtung 26 vorgezogen und dabei die Ladepattform 49 angehoben.

**Bezugszeichenliste:**

| | | | |
|---|---|---|---|
| 19 | Ladeplattform | 54 | Halter |
| 20 | Lastkraftwagen | 55 | Seiltrieb |
| 21 | Aufbau | 56 | Linearantrieb |
| 22 | Rückseite | 57 | Seil |
| 23 | Konsole | 58 | Seilrolle |
| 24 | Längsträger | 59 | Drehachse |
| 25 | Längsseite | 60 | Anlenkstelle |
| 26 | Fahrtrichtung | 61 | Hydraulikzylinder |
| 27 | Querseite (vordere) | 62 | Kolbenstange |
| 28 | Querseite (hintere) | 63 | Träger |
| 29 | Boden | 64 | kolbenstangenseitiges Ende |
| 30 | Nutzseite | 65 | oberes Ende |
| 31 | Spindeltrieb | 66 | Achsmotor |
| 32 | Gewindespindel | 67 | Motorwelle |
| 33 | Laufmutter (vordere) | 68 | Abtriebswelle |
| 34 | Laufmutter (hintere) | 69 | Gehäuse |
| 35 | Motor (vorderer) | | |
| 36 | Motor (hinterer) | | |
| 37 | Kraftübertragungswelle | | |
| 38 | Abdeckung | | |
| 39 | Arm | | |
| 40 | Anlenkstelle | | |
| 41 | Anlenkstelle | | |
| 42 | Lenkerarm | | |
| 43 | Lenkerarm | | |
| 44 | Abtriebswellenstummel | | |
| 45 | Unterseite | | |
| 49 | Ladeplattform | | |
| 50 | Hubarm | | |
| 51 | Schwenkachse | | |
| 52 | Klappachse | | |
| 53 | Unterfahrschutzrohr | | |

## Patentansprüche

1. Hubladebühne zum heckseitigen Anbau an ein Fahrzeug, mit einer Ladeplattform (19, 49) und Antrieben zum Heben und Senken der Ladeplattform (19, 49) und zum Verschwenken der Ladeplattform (19, 49) von einer hochgeklappten Ruhestellung in mindestens eine heruntergeklappte Gebrauchsstellung und umgekehrt, **dadurch gekennzeichnet, dass** die Antriebe zum Heben, Senken und Verschwenken Spindeltriebe (31) aufweisen oder alternativ der Antrieb zum Heben und Senken mit Seiltrieben (55) versehen ist und der Antrieb zum Verschwenken wenigstens einen Achsmotor (66) aufweist.

2. Hubladebühne nach Anspruch 1, **dadurch gekennzeichnet, dass** gegenüberliegende Längsseiten (25) der Ladeplattform (19, 49) mit jeweils einem Arm (39) verbunden sind, vorzugsweise jeder Arm (39) gleicherweise und gleichgerichtet in seiner Gebrauchsstelllung in Fahrtrichtung (26) des Fahrzeugs schräg ansteigend gegenüber einer zum Fahrzeug weisenden vorderen Querseite (27) der Ladeplattform (19) vorsteht.

3. Hubladebühne nach Anspruch 1 oder 2, **dadurch gekennzeichnet, dass** jedem Arm (39) ein gleicher, vorzugsweise selbsthemmender, Spindeltrieb (31) mit insbesondere jeweils zwei in Fahrtrichtung (26) hintereinanderliegend angeordneten Gewindespindeln (32) zugeordnet ist.

4. Hubladebühne nach einem der vorhergehenden Ansprüche, **dadurch gekennzeichnet, dass** jeder Spindeltrieb (31) zwei Gewindespindeln (32) und mindestens eine damit in Eingriff stehende Laufmutter (33, 34) aufweist und jedem Spindeltrieb (31) Antriebe zugeordnet sind, wobei die Laufmuttern (33, 34) bevorzugt durch Lenkerarme (42, 43) an den jeweiligen Arm (39) angekoppelt sind.

5. Hubladebühne nach einem der vorhergehenden Ansprüche, **dadurch gekennzeichnet, dass** durch synchrones Verdrehen aller Gewindespindeln (32) in eine gleiche Richtung die Arme (39) mit der davon getragenen Ladeplattform (19) hebbar und durch synchrones Verdrehen in eine entgegengesetzte Richtung die Arme (39) mit der Ladeplattform (19) senkbar sind.

6. Hubladebühne nach einem der vorhergehenden Ansprüche, **dadurch gekennzeichnet, dass** durch gleichzeitiges, aber gegenseitiges Verdrehen der Gewindespindeln (32) die Arme (39) mit der davon getragenen Ladeplattform (19) in die Gebrauchsstellung der Ladeplattform herunterklappbar sind, und durch gleichzeitige Umkehr der Drehrichtungen aller Gewindespindeln (32) die Arme (39) mit der Ladeplattform (19) in die Ruhestellung der Ladeplattform (19) hochklappbar sind.

7. Hubladebühne nach einem der vorhergehenden Ansprüche, **dadurch gekennzeichnet, dass** die Gewindespindeln (32) durch mindestens einen Motor, vorzugsweise mindestens einen Elektromotor oder mindestens einen Hydraulikmotor, wahlweise in die eine Richtung oder die andere Richtung drehend antreibbar sind, vorzugsweise jede Gewindespindel (32) durch einen eigenen Motor drehend antreibbar ist, oder eine Gewindespindel (32) jedes Spindeltriebs (31) von jeweils einem Motor drehend antreibbar ist, wobei der eine Motor zum Antrieb einer Gewindespindel (32) eines dem jeweiligen Arm (39) zugeordneten Gewindespindelpaars ausgebildet ist, während der andere Motor die andere Gewindespindel (32) des jeweiligen Gewindespindelpaars antreibt.

8. Hubladebühne nach einem der vorhergehenden Ansprüche, **dadurch gekennzeichnet, dass** alle Gewindespindeln (32) aufrechtstehend an ihrem jeweiligen Ende direkt oder indirekt am Chassis des Fahrzeugs drehbar gelagert sind, wobei jede Gewindespindel (32) an einem Ende drehend antreibbar ist.

9. Hubladebühne nach Anspruch 1, **dadurch gekennzeichnet, dass** jede der gegenüberliegenden Längsseiten (25) der Ladeplattform (49) einen vorzugsweise gleichen Hubarm (50) aufweist, wobei bevorzugt ein in Fahrtrichtung (26) gesehen vorderes Ende jedes Hubarms (50) frei um eine horizontale quer zur Fahrtrichtung (26) verlaufende Schwenkachse (51) verschwenkbar direkt oder indirekt am Chassis des Fahrzeugs gelagert ist, und/oder an den den vorderen Enden gegenüberliegenden hinteren Enden jedes Hubarms (50) die Ladeplattform (49) um eine horizontale und in Fahrtrichtung (26) verlaufende Klappachse (52) an oder in der Nähe einer vorderen Querseite (27) der Ladeplattform (49) drehbar gelagert ist, und/oder jedem Hubarm (50) ein eigener Seiltrieb (55) zugeordnet ist.

10. Hubladebühne nach Anspruch 1 oder 9, **dadurch gekennzeichnet, dass** ein erstes Ende mindestens eines Seils (57) jedes Seiltriebs (55) an einer Anlenkstelle (60) zwischen den gegenüberliegenden Enden jedes Hubarms (50) befestigt ist, wobei vorzugsweise jeder Hubarm (50) in einer eigenen vertikalen und in Fahrtrichtung (26) verlaufenden Ebene angeordnet ist und/oder die Ebenen sich in Bereichen gegenüberliegender Längsseiten (25) der Ladeplattform (49) befinden und/oder jeder Seiltrieb (55) vorzugsweise flachliegend oder horizontalverlaufend in der Ebene des ihm zugeordneten Hubarms (50) angeordnet ist.

11. Hubladebühne nach einem der Ansprüche 1, 9 oder 10, **dadurch gekennzeichnet, dass** das mindestens eine Seil (57) jedes Seiltriebs (55) über eine Umlenkung, vorzugsweise eine Seilrolle (58), oberhalb des jeweiligen Hubarms (50) geführt ist.

12. Hubladebühne nach einem der Ansprüche 1 sowie 9 bis 11, **dadurch gekennzeichnet, dass** jeder Seiltrieb (55) einen Linearantrieb (56) aufweist, an dem ein zweites Ende des mindestens einen Seils (57) jedes Seiltriebs (55) angekoppelt ist.

13. Hubladebühne nach einem der Ansprüche 1 sowie 9 bis 12, **dadurch gekennzeichnet, dass** von beiden synchron verfahrbaren Linearantrieben (56) die diesen zugeordneten Seile (57) gleichermaßen gleichsinnig in den vertikalen Ebenen, in denen auch die Hubarme (50) liegen, in ihrer Längsrichtung hin- und herbewegbar sind, um gemeinsam die Ladeplattform (49) zu heben bzw. zu senken.

14. Hubladebühne nach Anspruch 1 sowie den Ansprüchen 9 bis 13, **dadurch gekennzeichnet, dass** auf der Klappachse (52) der Ladeplattform (49) gleichachsig der wenigstens eine Achsmotor (66) zum Verschwenken der Ladeplattform (49) angeordnet ist und vorzugsweise einerseits der wenigstens eine Achsmotor (66) mit seinem Gehäuse (69) mit der Ladeplattform (49) und andererseits der wenigstens eine Achsmotor (66) mit seiner Motorwelle (67) mit den auf der Klappachse (52) liegenden oder diese bildenden zweiten Enden der Hubarme (50) unverdrehbar verbunden ist oder auch umgekehrt.
